# EUROPÄISCHE PATENTSCHRIFT

(11) **EP 1 122 517 B1**
(45) Veröffentlichungstag und Bekanntmachung des Hinweises auf die Patenterteilung: **05.10.2011**
(21) Anmeldenummer: 01100872.9
(22) Anmeldetag: 16.01.2001
(51) Int. Cl.: G01C 21/34

(54) **Navigationssystem und Verfahren zur nutzerspezifischen Anpassung eines Navigationssystems**
Navigation system and user specific method for adapting a navigation system
Système de navigation et méthode pour adapter un système de navigation de façon spécifique à l'utilisateur

(30) Priorität: 01.02.2000 DE 10004163
(43) Veröffentlichungstag der Anmeldung: 08.08.2001
(73) Patentinhaber: ROBERT BOSCH GMBH, 70442 Stuttgart (DE)
(72) Erfinder: Petzold, Bernd, 31515 Wunstorf (DE); Hahlweg, Cornelius, 31139 Hildesheim (DE); Draeger, Gerd, 38102 Braunschweig (DE); Kersken, Ulrich, 31199 Diekholzen (DE)

(56) Entgegenhaltungen:
- WO-A-93/09510
- WO-A-96/39689
- US-A- 5 802 492

## Beschreibung

### Technisches Gebiet

Die Erfindung betrifft ein Verfahren zur nutzerspezifischen Anpassung eines Navigationssystem enthaltend eine Straßenkarte und ein hiermit zur Übertragung von Kartendaten gekoppeltes Routingmodul sowie ein Verfahren zur nutzerspezifischen Anpassung eines derartigen Navigationssystems.

### Stand der Technik

Navigationssysteme zur Unterstützung eines Verkehrsteilnehmers wie insbesondere eines Autofahrers sind bekannt und bestehen im wesentlichen aus den Subsystemen (a) Digitale Straßenkarte, (b) Rechenmodul zur Fahrtroutenberechnung, (c) Positionsbestimmung, (d) Systemverwaltung, (e) Sensorik zur Erkennung von Fahrzeugbewegungen, (f) Eingabeeinheit und (e) Ausgabeeinheit für die Bedienung und Zielführung. Die Routenberechnung erfolgt in der Regel auf der Basis von verschiedenen Optimierungsparametern, die vom Nutzer vorab eingestellt werden müssen oder bereits herstellerseitig in den Algorithmen zur Routenberechnung fest verankert sind. Die Optimierung erfolgt mit Hilfe von in einer Datenbasis enthaltenen Bewertungen der beteiligten Streckenelemente, welche zum Beispiel Länge, mögliche Geschwindigkeit, Straßentyp und dergleichen umfassen können. Die Auswahl einer optimalen Route kann zum Beispiel in der Zusammenstellung der schnellsten oder der kürzesten Route bestehen. Welche Gewichtung hier vorgenommen wird, kann durch die persönlichen Nutzerpräferenzen beeinflusst werden.

Die herstellerseitig vorgegebene Optimierung ist in der Regel auf einen "Durchschnittsfahrer" parametrisiert und liefert daher auch nur für einen solchen eine optimale Route. Unterschiedliche Fahrer bewerten die Routenempfehlung jedoch in aller Regel verschieden. Es werden zum Beispiel bestimmte Straßentypen bevorzugt beziehungsweise gemieden, oder die Durchschnittsgeschwindigkeit auf Autobahnen variiert je nach Fahrzeugtyp, Fahrertemperament oder dergleichen. Eine Einbeziehung dieses individuellen Fahrerverhaltens oder von anderen Präferenzen bei der Routenwahl (zum Beispiel Bevorzugung landschaftlich schöner Strecken) erfolgt derzeit bestenfalls durch eine manuelle und in der Regel nur bei stehendem Fahrzeug mögliche Eingabe von vorgegebenen Parametern. Dies erschwert insbesondere mit steigender Parameterzahl die Übersichtlichkeit und Bedienbarkeit des Navigationssystems, so dass eine sinnvoll abgestimmte Modifikation aller relevanten Parameter nur von erfahrenen beziehungsweise technisch interessierten Nutzern erwartet werden kann.

Aus der US-A-5 802 492 ist ein Navigationssystem enthaltend eine Straβenkarte und ein hiermit zur Übertragung von Kartendaten gekoppeltes Routingmodul bekannt, bei dem zwischen der Straßenkarte und dem Routingmodul ein variables Filtermodul angeordnet ist, welches die Kartendaten nutzerspezifisch transformiert.

Die WO-A-93 09510 offenbart ein Fahrzeugnavigationssystem, bei dem Detaillierung und Zeitpunkt von Zielführungsinformationen an Benutzervorlieben bzw. zurückliegendes Benutzerverhalten mittels einer Fuzzy-Logik angepasst werden.

Aus der WO-A-96 39689 ist ein Reise-Informationssystem entnehmbar, bei dem dem Nutzer Informationen aus einer Vielzahl von Datenbasen zur Verfügung gestellt werden. Der Nutzer kann dabei aus den angebotenen Informationen auswählen.

### Darstellung der Erfindung, Aufgabe, Lösung, Vorteile

Aufgabe der vorliegenden Erfindung war es, ein Navigationssystem und ein Verfahren zu dessen nutzerspezifischen Anpassung zur Verfügung zu stellen, bei welchen der Nutzer sich nicht selbst mit dem Vorgang der Anpassung auseinandersetzen muss und bei welchem die Anpassung ohne größere Veränderung an vorhandenen Navigationssystemen möglich ist.

Diese Aufgabe wird durch ein Navigationssystem nach Anspruch 1 sowie ein Verfahren nach Anspruch 4 gelöst.

Das Navigationssystem enthält eine Straßenkarte und ein hiermit zur Übertragung von Kartendaten gekoppeltes Routingmodul, in welchem die Berechnung der getroffenen Routenempfehlungen nach vorgegebenen Optimierungskriterien erfolgt. Das Navigationssystem ist dadurch gekennzeichnet, dass zwischen der Straßenkarte und dem Routingmodul ein variables Filtermodul angeordnet ist, welches die Kartendaten in nutzerspezifischer Weise transformiert.

Das erfindungsgemäße Navigationssystem baut demnach auf herkömmlichen Navigationssystemen mit den notwendigerweise vorhandenen Komponenten "Straßenkarte" und "Routingmodul" auf. In den internen Aufbau und die Abläufe in diesen Modulen wird jedoch nicht eingegriffen. Statt dessen wird zur Erzielung einer nutzerspezifischen Anpassung des Navigationssystems zwischen der Straßenkarte und das Routingmodul ein Filtermodul angeordnet, welches durch eine geeignete Transformation der von der Straßenkarte zum Routingmodul übertragenen Daten eine nutzerspezifische Anpassung erlaubt. Zu diesem Zweck ist das Filtermodul variabel, das heißt, dass die zwischen seinem Eingang und seinem Ausgang vorgenommene Transformation veränderlich ist. Erfindungsgemäß wird dabei die Transformation so eingestellt, dass das Navigationssystem insgesamt ein an den jeweiligen Nutzer besser angepasstes Verhalten zeigt. Die gewünschte Beeinflussung des Routingverhaltens des Navigationssystems durch die Transformation des Filtermoduls kann zum Beispiel dadurch erhalten werden, dass die von der Straßenkarte zur Verfügung gestellten Informationen, die unter anderem Eigenschaften wie Straßentyp, Bebauungsgrad, landschaftliche Umgebung und dergleichen von Streckenabschnitten enthalten, in bestimmter Weise verändert werden, so dass den Nutzerpräferenzen besser Rechnung getragen wird. Wenn für den Nutzer zum Beispiel landschaftliche Aspekte keine Rolle spielen, könnten diese Informationen ganz in den von der Straßenkarte übertragenen Daten ausgeblendet werden. Das Filtermodul erlaubt demnach ohne eine grundlegende Veränderung der Struktur bekannter Navigationssysteme, den Datenstrom in das Routingmodul beziehungsweise das Zielführungsmodul so zu beeinflussen, dass bezüglich der Routenvorschläge mit großer Wahrscheinlichkeit im Sinne des Fahrers entschieden wird.

Bei der erfindungsgemäßen Ausgestaltung des Navigationssystems ist das Filtermodul adaptiv. Das heißt, dass es sich mit geeigneten Verfahren und Algorithmen automatisch an das beobachtete Verhalten des Nutzers anpasst. Zu diesem Zweck sollte das Filtermodul auf eine Statistik des Fahrverhaltens des jeweiligen Nutzers zurückgreifen können beziehungsweise direkt durch die Verwendung des Navigationssystems durch den Nutzer angelernt werden können.

Die Routenwahl und Zielführung des Navigationssystems kann somit über eine nutzerspezifische Umbewertung der auf der digitalen Karte mitgelieferten Optimierungskriterien der einzelnen Streckenabschnitte beeinflusst werden. Diese Umbewertung erfolgt mittels eines vorzugsweise mehrdimensionalen und nichtlinearen Filtermoduls für die Eingangsdaten des Routingmoduls, wobei das Filtermodul vorzugsweise zahlreiche variable Parameter besitzt, deren Wert durch Anlernen auf den jeweiligen Nutzer angepasst wird. Die derart adaptierten Parameter repräsentieren dann das eigentliche Nutzerprofil beziehungsweise implizite Fahrerprofil, welches ein generelles, vom absoluten Ort unabhängiges Verhalten beschreibt.

Die Adaptation des Filtermoduls kann sowohl online während der Fahrt als auch offline mittels detailliert aufgezeichneter Fahrverläufe erfolgen. Vorzugsweise wird jedoch nicht das jeweils aktive Filtermodul adaptiert, sondern erfindungsgemäß ist eine Kopie dieses Filtermoduls vorhanden, an welcher außerhalb des aktiven Betriebes die Adaptation vorgenommen werden kann. Das heißt, dass die entsprechende Kopie sich nicht im Vorwärtszweig der Regelung befindet und somit nicht an der aktiven Regelung des Fahrprozesses beteiligt ist. Sie wird vielmehr parallel zum aktiven System mitlaufend trainiert. Ebenso ist auch ein off-line Training mit Hilfe von aufgezeichneten Daten denkbar. Auf diese Weise ist sichergestellt, dass die Adaptation die Geschwindigkeit des aktiven Systems nicht beeinträchtigt und dass eventuelle Fehler, die bei der Adaptation auftreten, keine unmittelbaren Auswirkungen haben können. Das aktive Filtermodul kann dann bei passender Gelegenheit gegen die in zufriedenstellender Weise adaptierte Kopie des Filtermoduls ausgetauscht werden.

Als Eingangsdaten des Filtermoduls können neben den umzubewertenden Größen beliebige andere für das Verhalten des Fahrers relevante Daten dienen. Die Ausgangsdaten des Filtermoduls sind gegenüber dem Eingangsdatensatz vorzugsweise von gleicher oder geringerer Dimension.

Bei dem adaptiven Filtermodul kann es sich erfindungsgemäß um ein künstliches neuronales Netzwerk (NN) oder um eine Fuzzy-Logic-Einheit handeln. Ein neuronales Netzwerk hat den Vorteil, dass es mit bekannten Verfahren wie zum Beispiel dem Backpropagation trainiert werden, ohne dass ein detailliertes Verständnis der zugrunde liegenden Zusammenhänge vorhanden sein muss. Durch den entsprechenden Lernalgorithmus ermittelt das neuronale Netzwerk vielmehr die relevanten Zusammenhänge und Parameter von selbst. Allerdings ist es von großem Vorteil, bei der Wahl bzw. Konfiguration der Netzstruktur im Sinne einer zu parametrisierenden Ansatzfunktion bereits soviel wie möglich über bekannte Zusammenhänge zu berücksichtigen, um den Lernprozess hierdurch zu entlasten. Andernfalls kann die Konvergenz des Lernens für praktische Zwecke zu langsam vorangehen oder nur zu unbefriedigenden Resultaten führen. Die in den Parametern eines angelernten neuronalen Netzes implementierte hochgradig nichtlineare Funktion vieler Variabler ist für eine Interpretation und Analyse hinsichtlich der zugrundeliegenden Gesetzmäßigkeiten so gut wie unzugänglich.

Auch bei Verfahren, welche die Fuzzy-Logic nutzen, sollten Vorstellungen über die zugrunde liegenden Zusammenhänge existieren. Der Vorteil solcher Verfahren liegt gerade darin, dass in unscharfen sprachlichen Regeln ausgedrückte Gesetzmäßigkeiten in angemessener Weise in einen automatischen Algorithmus umgesetzt werden können. Die Funktionsweise dieses Algorithmus ist dabei gut nachvollziehbar, so dass sie bei Bedarf in geeigneter Weise beeinflusst werden kann.

Das erfindungsgemäße Verfahren zur nutzerspezifischen Anpassung eines Navigationssystems mit einer Straßenkarte und einem Routingmodul gemäß Anspruch 1, ist so gestaltet, dass die von der Straßenkarte zum Routingmodul übertragenen Kartendaten einer nutzerspezifischen Transformation unterworfen werden. Durch eine derartige Transformation lässt sich die individuelle Anpassung des Navigationssystems an einen Nutzer erzielen, ohne dass in die interne Struktur der Komponenten des Navigationssystems eingegriffen werden muss.

Die Transformation zwischen der Straßenkarte und dem Routingmodul wird dabei erfindungsgemäß an das Nutzerverhalten adaptiert. Man erhält somit ein System, welches sich im Laufe der Benutzung durch einen speziellen Nutzer immer mehr an dessen Gewohnheiten und Präferenzen anpasst, so dass es schließlich mit hoher Wahrscheinlichkeit Routenvorschläge machen kann, welche den Wünschen des Nutzers entsprechen.

Die Adaptation der Transformation wird erfindungsgemäß vorzugsweise vermöge der Abweichung zwischen der vom Routingmodul vorgeschlagenen und der vom Fahrer tatsächlich ausgeführten Fahrtroute vorgenommen. Diese Abweichung beinhaltet nämlich eine Information darüber, inwieweit der Fahrer mit den vorgeschlagenen Routen einverstanden war oder nicht. Durch Beobachtung der Abweichungen und eine entsprechende Adaptation der Transformation derart, dass die Abweichungen möglichst minimiert werden, kann demnach die gewünschte Anpassung des Navigationssystems an die Nutzerpräferenzen erfolgen.

Dabei wird gemäß Anspruch 5 vorzugsweise eine Kopie der Transformation außerhalb des aktiven Betriebs adaptiert und die aktive Transformation in Zeitabständen durch die adaptierte Kopie ersetzt. Durch dieses Vorgehen ist es möglich, dass der eigentliche Routingprozess und der Zielführungsprozess durch die Adaptation nicht aufgehalten oder gestört werden und dass eventuelle Fehlentwicklungen bei der Adaptation, die zum Beispiel durch ein untypisches und daher nicht als Vorbild geeignetes Fahrerverhalten entstehen können, nicht zu einer Verschlechterung des Gesamtsystems führen.

Vorteilhaft an dem beschriebenen Verfahren ist insbesondere, dass keine explizite Fahrerstatistik über einen langen Zeitraum benötigt wird und dass somit insgesamt weniger Speicherplatz erforderlich ist. Gegenüber dem festen Einprägen von Nutzerprofilen und Nutzerwünschen ist weiterhin von Vorteil, dass die erforderliche Komplexität der Einstellungen und Parametersätze nach außen nicht sichtbar ist und damit nicht störend oder gar hinderlich wirken kann. Weiterhin ist durch die Methode des Anlernens eine Stabilität des Systems gesichert, wie sie bei willkürlicher Festlegung einer größeren Anzahl freier Parameter durch den Nutzer nicht zu erwarten ist.

### Kurze Beschreibung der Zeichnungen

Im Folgenden wird die Erfindung mit Hilfe der Figuren beispielhaft erläutert. Es zeigen:
- Fig. 1: eine regelungstechnische Darstellung eines nicht unterstützten Fahrvorganges;
- Fig. 2: eine regelungstechnische Darstellung eines Navigationssystems;
- Fig. 3: ein erfindungsgemäßes Navigationssystem mit einem zwischen- geschalteten neuronalen Netz;
- Fig. 4: ein Trainingsschema für das neuronale Netz nach Figur 3.

### Bester Weg zur Ausführung der Erfindung

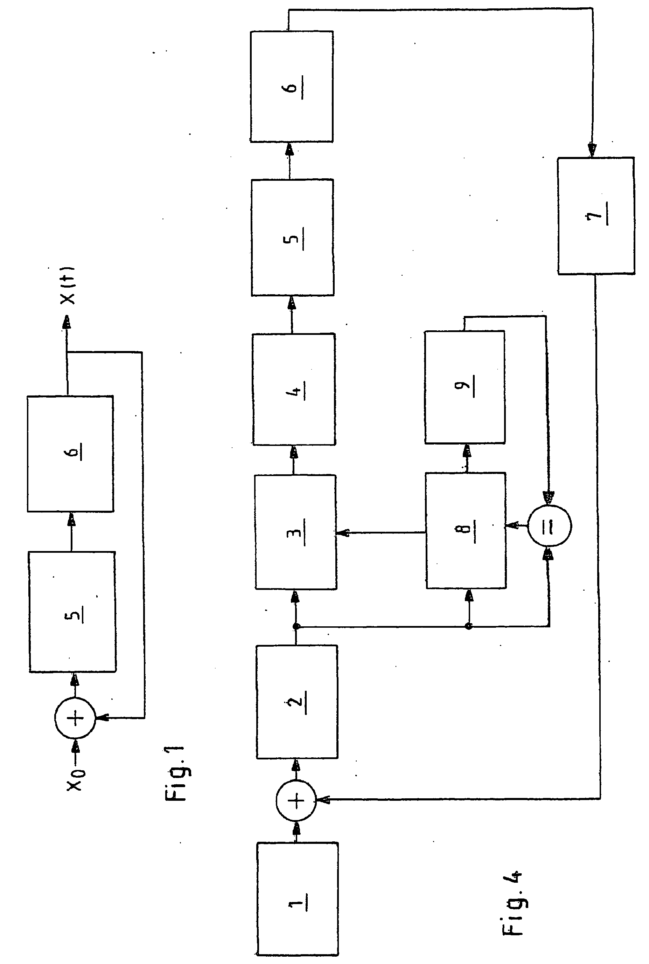

Ein einfaches regelungstechnisches Modell eines Fahrers ohne Unterstützungssysteme ist in Figur 1 dargestellt. Basisgröße dieses Modells ist die laufende Zeit t. Sämtliche dargestellten Signale können skalarer oder vektorieller (das heißt mehrkomponentiger) Natur sein (entsprechend ist auch das Additionsglied aufzufassen). Einzelne Komponenten können bei dieser Darstellungsart auch durch die Systemblöcke "durchgeschleift", das heißt unverändert durchgeleitet werden. Letzteres gilt zum Beispiel für die laufende Zeit t.

Die Eingangsgröße x₀ ist das zunächst statisch festgelegte Fahrziel. Fahrer 5 und Fahrzeug 6 bilden den Vorwärtszweig. Diese Zuordnung erfolgt aufgrund der Vorstellung, dass Fahrer und Fahrzeug bezüglich ihrer Position eine Einheit bilden und der Vergleich der Eingangsgrößen und der rückgeführten Größen beim Fahrer liegt, welcher letztlich die volle Kontrolle behalten soll. Ausgangsgröße des Vorwärtszweiges ist die aktuelle Position x(t) des Fahrzeugs, auch wenn diese nicht immer exakt bestimmbar ist. Die in Figur 1 angegebene Konfiguration trifft prinzipiell auf jeden Fahrer zu, der bewusst sein Fahrzeug auf ein bestimmtes Ziel zusteuert und dabei seine aktuelle Position mit seiner Zielvorstellung vergleicht.

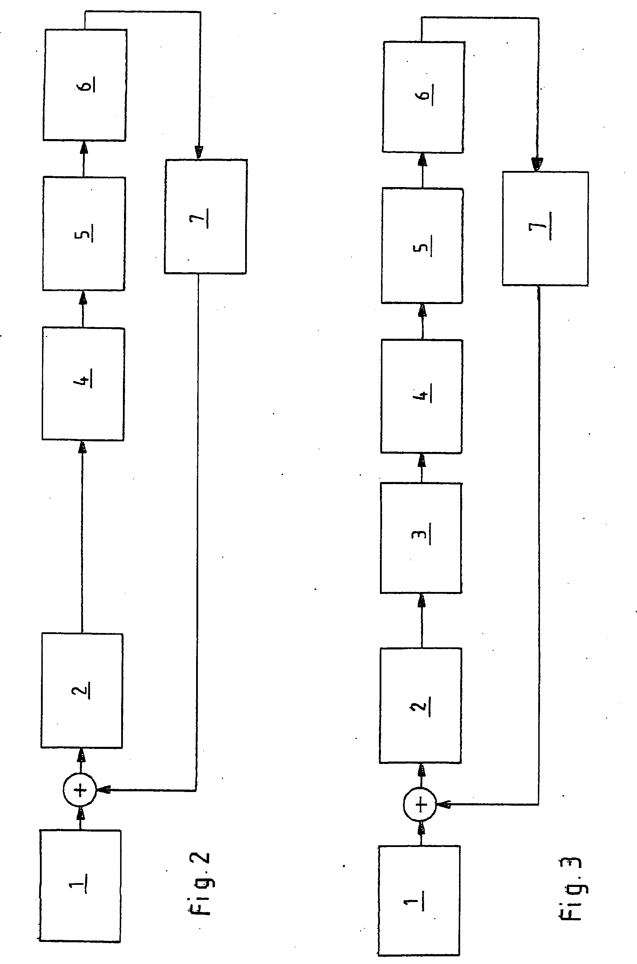

In Figur 2 ist ein System dargestellt, bei dem der Fahrer 5 durch eine automatisierte Navigation unterstützt wird. Die Navigation lässt dem Fahrer die volle Entscheidungsfreiheit, greift also nur durch im Zweifelsfalle zu ignorierende Anweisungen ins Fahrgeschehen ein. Sie lässt sich durch Einfügen eines Ortungssystems 7, welches die aktuelle Position von Fahrer/Fahrzeug bestimmt, in den Rückwärtszweig, sowie durch Einfügen eines map matching Moduls 2, das als eigentliches Vergleichsglied im Regelkreis dient, und eines Routingmoduls 4 in den Vorwärtszweig vor dem Fahrer 5 darstellen. Der natürlich stets parallel vorhandene "visuelle Zweig" des Fahrers ist zur Vereinfachung der Darstellung nicht wiedergegeben. Die Ortung kann durch direkt ortsbestimmende Fahrzeugsensorik wie zum Beispiel Radsensoren oder GPS (Global Positioning System) erfolgen.

Das in Figur 2 dargestellte Navigationssystem wird erfindungsgemäß dadurch in nutzerspezifischer Weise angepasst, dass zwischen dem map matching Modul 2 und dem Router 4 ein nichtlineares Übertragungsmodul 3 in den Datenstrom geschaltet wird. Im dargestellten Beispiel handelt es sich hierbei um ein neuronales Netzwerk NN. Entspricht dessen Verhalten dem Verhalten des jeweiligen Fahrers, so werden dessen Entscheidungen bezüglich der Routenwahl mit hoher Wahrscheinlichkeit vorweggenommen, was wiederum zu weniger "Fehlentscheidungen" des Fahrers im Sinne des Navigationssystems führt.

Die Routensuche und Auswahl der vom Fahrer vorgeschlagenen Route erfolgen in dem in Figur 3 dargestellten System nach Bewertungskriterien, die aus den in der Datenbasis 1 enthaltenen Bewertungen der beteiligten Streckenelemente (Länge, Geschwindigkeit, Straßentyp etc.) gewonnen werden. Diese Bewertungen sind jedoch auf einen Durchschnittsfahrer zugeschnitten und liefern daher nur für einen solchen eine optimale Route. Unterschiedliche Fahrer bewerten jedoch auch verschieden, bevorzugen oder meiden bestimmte Straßentypen unterschiedlich oder zeigen verschiedene Durchschnittsgeschwindigkeiten auf Autobahnen je nach Fahrzeug und Fahrertemperament.

Eine Personalisierung der Routensuche beziehungsweise der Zielführung ist nun dadurch möglich, dass die in das Routingmodul 4 einlaufenden Kartendaten in ihren Bewertungsparametern verändert werden. Dies erfolgt durch die Transformation des einlaufenden Parametersatzes (mehrdimensionaler Vektor) mittels der in dem neuronalen Netzwerk 3 implementierten allgemeinen Übertragungsfunktion. Ausgangsseitig des neuronalen Netzwerks 3 liegt ein Vektor gleicher oder niedriger Dimension vor, dem das Fahrerprofil so aufgeprägt wurde, dass der Router 4 mit hoher Wahrscheinlichkeit im Sinne des Fahrers entscheidet. Dabei können durch das neuronale Netzwerk 3 unter anderem mehrere Kostenkriterien auf eine einzige Kostenfunktion abgebildet werden, die dann vom Router 4 verarbeitet wird. Zum Beispiel kann eine Abbildung der Kostenkriterien auf die Geschwindigkeitsbewertung erfolgen.

Die allgemeine Übertragungsfunktion zwischen dem map matching Modul 2 und dem Router 4 weist der Komplexität des Systems gemäß in der Regel ein stark nichtlineares Verhalten auf. Ferner verfügt sie vorzugsweise über eine große Zahl freier Parameter. Diese Parameter werden vorteilhafterweise in der unten erläuterten Art empirisch durch Anlernen ermittelt. Die genannten Anforderungen werden besonders gut durch den Einsatz eines neuronalen Netzes 3 als Übertragungsglied erfüllt.

In Figur 4 ist der Aufbau des in Figur 3 dargestellten erfindungsgemäßen Navigationssystems für den Vorgang des Anpassens des Filtermoduls 3 dargestellt. Das in diesem Falle als Filter dienende neuronale Netz 3 soll dabei so eingestellt werden, dass sich das Fahrerverhalten mit den vorangegangenen Routenvorschlägen deckt.

Das Verhalten des Fahrers 5 wird am Ausgangs des map matching Moduls 2 sichtbar und kann dort als Information für das Training des neuronalen Netzes abgegriffen werden. Um dabei ein ständig lernfähiges System zu erhalten und die eigentliche Aktivität des Navigationssystems durch die Adaptation nicht zu stören, wird parallel zum primären Routingmodul 4 mit seinem vorgeschalteten (primären) neuronalen Netzwerk 3 ein zweites identisches Subsystem aus sekundärem Router 9 und sekundärem neuronalem Netzwerk 8 betrieben. Auf das sekundäre Filtermodul 8 wird ein eigener Anlernalgorithmus angewendet. Das Ergebnis des sekundären Routings wird mit dem aktuellen Fahrerverhalten verglichen und mit dem Resultat dieses Vergleiches wird der Anlernalgorithmus gespeist. Um die Kausalität des Systems zu wahren, muss gegebenenfalls noch ein Verzögerungsglied (nicht dargestellt) vor den Anlernzweig geschaltet werden.

Der Trainingsvorgang des neuronalen Netzwerks 8 besteht aus einer laufenden Variation der Parameter (synaptischen Verknüpfungsgewichte) nach bekannten Algorithmen wie zum Beispiel dem Backpropagation (Grandientenverfahren). Diese Adaptation erfolgt solange, bis eine festzulegende Fehlerschranke unterschritten wird beziehungsweise bis der Vorgang konvergiert. Auf diese Weise erhält man im Sekundärzweig ein Filtermodul 8, welches das individuelle Fahrerprofil widerspiegelt. Dieser Bezug auf einen bestimmten Fahrer wird durch die als Zusatz angefügten Buchstaben XY angedeutet.

Das erste Anlernen eines Filters 8 aus dem Urzustand (Standardeinstellungen) kann so erfolgen, dass das primäre Filtermodul 3 zunächst als identische Abbildung konfiguriert wird. Das heißt, dass die Eingangsdaten aus dem map matching Modul 2 unverändert an das primäre Routermodul 4 weitergegeben werden. Während des nachfolgenden Betriebs des Navigationssystems erfolgt dann in der oben beschriebenen Weise die Adaptation des sekundären Filtermoduls 8. Wenn eine Konvergenz des Sekundärfilters 8 vorliegt, können dessen Parameter auf das Primärfilter 3 übertragen werden, womit das System erstmals personalisiert, das heißt auf den Fahrer XY zugeschnitten ist.

Das Sekundärfilter 8 wird nachfolgend permanent dem Anlernprozess unterworfen. Der Parametertransfer auf das primäre Filter 3 kann nunmehr jedesmal erfolgen, wenn das Primärfilter 3 nicht mehr in genügender Weise dem Fahrerverhalten entspricht, was vom primären Router 4 direkt erkannt wird.

Die mit dem oben beschriebenen Verfahren erhaltene Personalisierung des Navigationssystems bezieht sich auf das gesamte Verhalten des Fahrers, ohne auf spezielle lokale Erscheinungen Rücksicht zu nehmen, denn dazu müsste das gesamte befahrene Straßennetz im Filter abgebildet werden. Mit dem Parametersatz des Filters wird implizit ein Nutzerprofil erstellt. Dieser Parametersatz kann auf einem mobilen Datenträger (zum Beispiel Chipkarte, Diskette) abgespeichert werden, um dann in anderen Fahrzeugen, die mit dem gleichen System ausgestattet sind, weiter verwendet werden zu können.

Mit der Verwendung individueller Fahrerprofile sollte vorzugsweise eine Fahreridentifikation gekoppelt sein, damit das System weiß, auf welchen Nutzer es sich gerade einzustellen hat. Weiterhin kann die Möglichkeit vorgesehen werden, unter verschiedenen Optimierungskriterien (zum Beispiel Wahl der schnellsten oder kürzesten Routen) erstellte Profile (Parametersätze) eines Nutzers zu speichern und bei Bedarf einzusetzen. Ferner sollte für den Nutzer die Möglichkeit vorgesehen werden, bei Bedarf stets auf einen normalen, also nicht personalisierten Betrieb umzuschalten.

In Fällen, in denen der Nutzer offensichtlich stark von seinem üblichen Verhalten abweicht (z.B. schnelle Fahrt in einem Notfall), sollte das System selbsttätig oder nach Abfrage des Nutzers den Anlernvorgang unterbrechen, um die implizite Statistik des Sekundärfilters nicht nachhaltig mit Informationen zu beeinflussen, welche nicht dem typischen Nutzerverhalten entsprechen.

Das oben beschriebene Verfahren kann auch in solchen Fällen angewendet werden, in denen einzelne Komponenten des Navigationssystems räumlich ausgelagert sind. Dies kann zum Beispiel bei zentral gestützten Navigationssystemen der Fall sein. Gegebenenfalls ist für deren Einbindung eine bidirektionale Kommunikation (zum Beispiel GSM) notwendig.

Das erfindungsgemäße Verfahren ermöglicht eine Anpassung des Navigationssystems an den jeweiligen Nutzer, ohne dass tiefergehende Eingriffe in die vorhandenen Komponenten erforderlich sind und ohne dass sich der Nutzer selbst um diese Anpassung bemühen muss. Vielmehr wird durch Beobachtung seines Verhaltens die notwendige Information gewonnen. Mit dem genannten Verfahren ist es zum Beispiel möglich, dass bei Befahren bestimmter Straßentypen mit untypischen Geschwindigkeiten (zum Beispiel 80 km/h auf Autobahnen, 110 km/h auf Bundesstraßen) im weiteren Verlauf der Benutzung des Navigationssystems eine deutliche Umpriorisierung dieser Straßentypen erfolgen kann. Weiterhin führt ein wiederholtes absichtliches Nichtbefolgen der ursprünglichen Zielführungsanweisungen auf einer festgelegten Strecke in immer gleicher Art und Weise zu einer Anpassung des Systems derart, dass die "falsche" Route letztlich als Vorschlag ausgegeben wird.

## Patentansprüche

1. Navigationssystem enthaltend eine Straßenkarte (1) und ein hiermit zur Übertragung von Kartendaten gekoppeltes Routingmodul (4), wobei zwischen der Straßenkarte (1) und dem Routingmodul ein variables Filtermodul (3) angeordnet ist, welches die Kartendaten nutzerspezifisch transformiert,
**dadurch gekennzeichnet, dass**
das Filtermodul (3) adaptiv ist.

2. Navigationssystem nach Anspruch 1, **dadurch gekennzeichnet, dass** eine Kopie (8) des Filtermoduls vorhanden ist, an welcher außerhalb des aktiven Betriebs die Adaptation vorgenommen werden kann.

3. Navigationssystem nach einem der Ansprüche 1 oder 2 , **dadurch gekennzeichnet, dass** das Filtermodul ein neuronales Netzwerk (3) oder eine Fuzzy-Logic-Einheit ist.

4. Verfahren zur nutzerspezifischen Anpassung eines Navigationssystems nach Anspruch 1 mit einer Straßenkarte (1) und einem Routingmodul (4), bei dem die von der Straßenkarte (1) zum Routingmodul übertragenen Kartendaten einer nutzerspezifischen Transformation (3) unterworfen werden, wobei die Transformation (3) an das Nutzerverhalten adaptiert wird, **dadurch gekennzeichnet, dass** die Adaptation der Transformation (8) über die Abweichung zwischen der vom Routingmodul (9) vorgeschlagenen und der tatsächlichen Fahrtroute erfolgt.

5. Verfahren nach Anspruch 4, **dadurch gekennzeichnet, dass** eine Kopie (8) der Transformation, die nicht im Navigationssystem im aktiven Betrieb steht, adaptiert wird und dass die aktive Transformation (3) in Zeitabständen durch die adaptierte Kopie (8) ersetzt wird.

## Claims

1. Navigation system, containing a road map (1) and a routing module (4) which is coupled thereto for the purpose of transferring map data, wherein the road map (1) and the routing module have a variable filter module (3) arranged between them which transforms the map data on a user-specific basis,
**characterized in that**
the filter module (3) is adaptive.

2. Navigation system according to Claim 1, **characterized in that** a copy (8) of the filter module is available on which the adaptation can be performed outside of active operation.

3. Navigation system according to either of Claims 1 and 2, **characterized in that** the filter module is a neural network (3) or a fuzzy logic unit.

4. Method for the user-specific adjustment of a navigation system according to Claim 1 having a road map (1) and a routing module (4), in which the map data transferred from the road map (1) to the routing module are subjected to user-specific transformation (3), wherein the transformation (3) is adapted to suit the user behaviour, **characterized in that** the transformation (8) is adapted using the discrepancy between the journey route proposed by the routing module (9) and the actual journey route.

5. Method according to Claim 4, **characterized in that** a copy (8) of the transformation which is not in the navigation system during active operation is adapted and **in that** the active transformation (3) is replaced by the adapted copy (8) at intervals of time.

## Revendications

1. Système de navigation contenant une carte routière (1) et un module (4) de définition d'itinéraire qui y est couplé en vue de la transmission de données cartographiques, un module de filtration modifiable (3) qui transforme les données cartographiques de manière spécifique à l'utilisateur étant disposé entre la carte routière (1) et le module de définition d'itinéraire, **caractérisé en ce que**
le module de filtration (3) est adaptatif.

2. Système de navigation selon la revendication 1, **caractérisé en ce qu'**il présente une copie (8) du module de filtration, sur laquelle l'adaptation peut être réalisée en dehors du mode actif.

3. Système de navigation selon l'une des revendications 1 ou 2, **caractérisé en ce que** le module de filtration est un réseau neuronal (3) ou une unité à logique floue.

4. Procédé pour adapter de manière spécifique à l'utilisateur un système de navigation selon la revendication 1 qui présente une carte routière (1) et un module (4) de définition d'itinéraire, et dans lequel les données cartographiques transmises par la carte routière (1) au module de définition d'itinéraire subissent une transformation (3) spécifique à l'utilisateur, la transformation (3) étant adaptée au comportement de l'utilisateur,
**caractérisé en ce que**
l'adaptation de la transformation (8) s'effectue en faisant intervenir l'écart entre l'itinéraire proposé par le module de définition d'itinéraire (9) et l'itinéraire effectif.

5. Procédé selon la revendication 4, **caractérisé en ce que** la copie (8) de la transformation qui est adaptée n'est pas en service actif dans le système de navigation et **en ce que** la transformation active (3) est remplacée à intervalles de temps par la copie adaptée (8).
